# FASCICULE DE BREVET EUROPEEN

(11) **EP 0 613 615 B1**
(45) Date de publication et mention de la délivrance du brevet: **10.02.1999**
(21) Numéro de dépôt: 94440014.2
(22) Date de dépôt: 03.03.1994
(51) Int. Cl.: A01D 33/02

(54) **Dispositif d'effanage de pommes de terre, ou autres tubercules et racines**
Kranktrennvorrichtung für Kartoffeln oder Rüben
Haulm remover for potatoes or rootcrops

(30) Priorité: 03.03.1993 FR 9302625
(43) Date de publication de la demande: 07.09.1994
(73) Titulaire: G.A.E.C. RADET AGRI, 51230 Fère Champenoise (FR)
(72) Inventeur: Radet, Michel, F-51230 Fere Champenoise (FR)
(74) Mandataire: Arbousse-Bastide, Jean-Claude Philippe

(56) Documents cités:
- EP-A- 0 212 151
- DE-A- 2 831 051
- DE-B- 1 607 628
- DE-C- 908 808
- FR-A- 2 220 175

## Description

La présente invention a pour objet un dispositif d'effanage de pommes de terre, ou autres tubercules et racines, adaptable sur un matériel d'arrachage, de chargement, de transport ou de nettoyage.

L'effanage est actuellement réalisé, après l'arrachage, à l'extrémité d'une bande transporteuse, où tourne en sens inverse un rouleau, ou une autre bande, entraînant les fanes et déchets, des griffes dirigeant la récolte.

Ces dispositifs présentent l'inconvénient de blesser la récolte contre les griffes, la rendant parfois impropre à la consommation.

D'autre part ces dispositifs nécessitent des interventions de débourrage, qui sont cause de nombreux accidents.

On connaît des dispositifs moins traumatisants pour la récolte, notamment celui décrit dans le document FR 2.579.408 utilisant de l'air comprimé pour nettoyer les plantes et légumes. Toutefois ce dispositif présente l'inconvénient d'être peu efficace et d'un coût élevé.

On connait également, des documents DE-A-2 831 051 (document qui montre les caractéristiques du préambule de la revendication 1) et EP-A-0 212 151, des dispositifs d'effanage de pommes de terre qui comprennent, outre une bande transporteuse associée à un rouleau qui tourne en sens inverse à l'une de ses extrémités, une soufflerie pour évacuer les fanes arrachées.

Toutefois ces dispositifs ne permettent pas d'assurer un effanage efficace et complet des pommes de terre.

La présente invention vise à remédier à ces divers inconvénients des dispositifs connus en proposant un dispositif d'effanage, adaptable sur les machines d'arrachage actuelles, de conception simple et ne blessant pas la récolte.

Le dispositif d'effanage objet de la présente invention utilise un flux d'air dirigé sensiblement horizontalement vers des moyens de préhension et d'évacuation des fanes et déchets, la récolte transitant par gravité entre ledit flux d'air et lesdits moyens de préhension et d'évacuation.

Le dispositif objet de la présente invention se caractérise essentiellement en ce qu'il comporte, en aval du dispositif d'arrachage, d'une part une bande transporteuse tendue entre deux rouleaux contre et sous l'un desquels tourne en sens inverse un rouleau transversal, l'ensemble surplombant un moyen d'évacuation de la récolte ; et d'autre part le conduit d'une soufflerie dont l'ouverture est disposée en regard de toute la largeur de ladite bande transporteuse et dudit rouleau transversal.

La récolte chargée de déchets est transférée sur la bande transporteuse, et lorsque qu'elle est soumise au flux d'air issu de la soufflerie, les fanes et déchets, du fait de leur faible densité, sont plaqués contre ladite bande transporteuse et entraînés entre le rouleau transversal et la bande transporteuse, puis évacués, la récolte propre étant entraînée par des moyens d'évacuation.

Vis à vis des dispositif existants, le dispositif d'effanage selon l'invention présente, outre une qualité supérieure du produit et un meilleur nettoyage, les avantages d'une sécurité de travail accrue et d'une diminution des coûts de production.

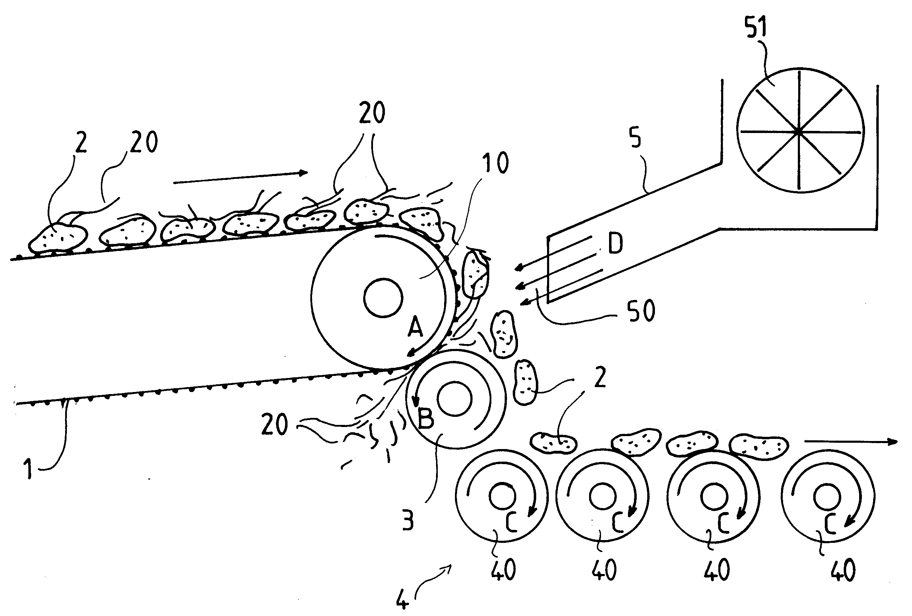

Les avantages et les caractéristiques de la présente invention ressortiront plus clairement de la description qui suit et qui se rapporte au dessin annexé, lequel en représente un mode de réalisation non limitatif.

La figure unique du dessin annexé représente une vue schématique de profil d'un dispositif d'effanage selon l'invention.

Si on se réfère à cette figure, on peut voir qu'un dispositif d'effanage selon l'invention comporte d'une part une bande transporteuse 1 déplaçant le produit 2 de la récolte, par exemple des pommes de terre, leurs fanes et autres déchets 20.

La bande transporteuse 1 est tendue sur deux rouleaux, dont un seul 10 est représenté, actionnés en rotation dans le sens de la flèche A.

En avant et sous le rouleau 10, un rouleau 3, disposé parallèlement à celui-ci, au contact de la bande transporteuse 1, tourne dans le sens inverse de celui du rouleau 10, selon la flèche B.

Ce rouleau 3 surplombe un moyen 4 d'évacuation des pommes de terre 2, essentiellement constitué de rouleaux 40 tournant dans le sens du rouleau 10, selon les flèches C.

En regard de toute la zone de contact de la bande transporteuse 1 et du rouleau 3, débouche un conduit 5 véhiculant un flux d'air 50 dans le sens des flèches D, à partir d'une soufflerie 51.

Ainsi lorsque les pommes de terre 2 quittent la bande transporteuse 1 pour tomber sur le rouleau 3, en passant devant l'ouverture du conduit 5, le flux d'air 50 plaque contre la bande transporteuse 1 les fanes et autres déchets 20, lesquels sont entraînés entre le rouleau 3 et la bande transporteuse et tombent en arrière du rouleau 3.

Les pommes de terre 2 débarrassées des déchets tombent ensuite sur le moyen d'évacuation 4 en vue de leur stockage.

## Revendications

1. Dispositif d'effanage de pommes de terre, ou autres tubercules et racines, adaptable sur un matériel d'arrachage, de chargement ou de nettoyage, caractérisé en ce qu'il comporte d'une part une bande transporteuse (1) tendue entre deux rouleaux contre et sous l'un desquels (10) tourne en sens inverse un rouleau transversal (3), l'ensemble surplombant un moyen (4) d'évacuation de la récolte ; et d'autre part le conduit (5) d'une soufflerie (51) dont l'ouverture est en regard de toute la largeur de ladite bande transporteuse (1) et dudit rouleau transversal (3), de manière que le flux d'air (50) sortant de ladite soufflerie (51) par ledit conduit (5) plaque les fanes et déchets (20) de la récolte (2) contre ladite bande transporteuse (1), lesdits fanes et déchets (20) étant entraînés entre cette dernière et le rouleau (3).

## Claims

1. Haulm remover for potatoes or other tubers and roots, able to be adapted to a pulling up, loading or cleaning equipment comprising firstly a belt conveyor(1)taut between two rollers with a transverse belt rotating anticlockwise under one of said rollers(10), the entire unit overhanging a device (4) for removing the crop ; and secondly a blower (51) characterised in that the transverse roller (3) is placed against the roller of the belt conveyor(1) and in that the opening of the pipe (5) of the blower (51) is located opposite the entire width of said belt conveyor(1) and said transverse roller (3) so that the flow of air (50) coming out from said pipe (5) flattens the haulms and waste (20) of the crop (2) against said belt conveyor(1) and in that said haulms and waste (20) are carried and pulled between the latter and the roller (3).

## Patentansprüche

1. Vorrichtung zum Schlagen von Kartoffeln oder anderen Knollen und Wurzeln, die auf eine Ausmachen-Beladen- oder Putzeinrichtung montierbar ist, einerseits mit einem Beförderungsband (1), das zwischen zwei Walzen gespannt ist, unter einer (10) der Walzen eine Querwalze (3) in der entgegensetzten Richtung gedreht wird, wobei die Gesamteinrichtung über einem Ernteaustragmittel (4) ragt; anderseits mit einem Gebläse (51), dadurch gekennzeichnet, daß die Querwalze (3) gegen die Walze (10) des Beförderungsbandes (1) angeordnet ist, und daß die Öffnung der Leitung (5) des Gebläses (51) der Gesamtbreite des besagten Beförderungsbandes (1) und der Querwalze (3) derart gegenübersteht, daß der aus der besagten Leitung (5) herausströmende Luftstrom Kraut und Abfall (20) der Ernte (2) an das Beförderungsband preßt und daß das besagte Kraut und der besagte Abfall (20) zwischen das letztere und die Walze (3) mitgenommen und abgerissen werden.
